# EUROPÄISCHE PATENTANMELDUNG

(11) **EP 1 700 659 A1**
(43) Veröffentlichungstag der Anmeldung: **13.09.2006**
(21) Anmeldenummer: 06101539.2
(22) Anmeldetag: 10.02.2006
(51) Int. Cl.: B23D 47/02, B25H 1/04

(54) **Zusammenfaltbarer Kappsägenständer**

(30) Priorität: 08.03.2005 DE 102005010354
(71) Anmelder: wolfcraft GmbH, 56746 Kempenich (DE)
(72) Erfinder: Radermacher, Uwe, 56745, Weibern (DE)
(74) Vertreter: Rieder, Hans-Joachim

(57) **Zusammenfassung**

Die Erfindung betrifft einen zusammenfaltbaren Ständer (1) für Kappsägen oder dergleichen mit einem langgestreckten Tragkörper (2), an welchem die Kappsäge befestigbar ist und an welchem an jedem seiner beiden Enden jeweils zwei Beine (6, 7) angelenkt sind, die von einer Verwahrstellung, in der sie sich im Wesentlichen parallel zum Tragkörper (2) erstrecken, in eine Gebrauchsstellung schwenkbar sind, in der sie im Wesentlichen quer vom Tragkörper (2) abragen. Um den zuvor beschriebenen zusammenfaltbaren Ständer gebrauchsvorteilhaft weiterzubilden wird vorgeschlagen, dass der Tragkörper (2) zwei mit einem Scharnier (5) miteinander verbundene Tragkörperabschnitte (3, 4) ausbildet, die in der Verwahrstellung parallel zueinander liegen und durch Schwenken um 180° in die Gebrauchsstellung bringbar sind.

## Beschreibung

Die Erfindung betrifft einen zusammenfaltbaren Ständer für Kappsägen oder dergleichen mit einem langgestreckten Tragkörper, an welchem die Kappsäge befestigbar ist und an welchem an jedem seiner beiden Enden jeweils zwei Beine angelenkt sind, die von einer Verwahrstellung, in der sie sich im Wesentlichen parallel zum Tragkörper erstrecken, in eine Gebrauchsstellung schwenkbar sind, in der sie im Wesentlichen quer vom Tragkörper abragen.

Ein derartiger zusammenfaltbarer Ständer ist aus der US 2004/0250903 A1 bekannt. Dieser zusammenfaltbare Ständer besteht ebenfalls aus einem langgestreckten Tragkörper, an dessen beiden Enden jeweils zwei Beine angelenkt sind. In der Gebrauchsstellung ragen die Beine im Wesentlichen quer vom Tragkörper ab. In der Verwahrstellung werden die Beine so verschwenkt, dass sie annähernd parallel zum Tragkörper liegen.

Ein ähnlich zusammenfaltbarer Ständer ist aus der DE 10303115 A1 bekannt. Hier besteht der zusammenfaltbare Ständer ebenfalls aus einem Tragkörper, an dessen Enden jeweils zwei Beine angelenkt sind. Im Wesentlichen funktionieren die Beine wie in der zuvor beschriebenen Schrift der US 2004/0250903 A1.

Der Erfindung liegt die Aufgabe zugrunde, den zuvor beschriebenen zusammenfaltbaren Ständer gebrauchsvorteilhaft weiterzubilden.

Gelöst wird die Aufgabe sowohl von jedem einzelnen Anspruch allein als auch von jedweder Kombination jedes Anspruches mit jedem beliebigen anderen Anspruch.

Der Anspruch 1 sieht zunächst und im Wesentlichen vor, dass der Tragkörper zwei mit einem Scharnier miteinander verbundene Tragkörperabschnitte ausbildet, die in der Verwahrstellung parallel zueinander liegen und durch Schwenken um 180 Grad in die Gebrauchsstellung bringbar sind.

Bevorzugt wird das Scharnier so ausgestaltet, dass es in der Gebrauchsstellung eine in der Vertikalen liegende Scharnierachse besitzt. Um die beiden scharnierfemen Enden der Tragkörperabschnitte in der Verwahrstellung zu fesseln, weisen die beiden scharnierfemen Enden einen Verschluss auf. Der Verschluss bildet insbesondere einen federbeaufschlagten Rasthaken aus. In der Gebrauchsstellung wird das Scharnier mit einem Fesselungsglied fixiert. Das Fesselungsglied liegt an der der Scharnierachse abgewandten Seite des Scharniers an und wird insbesondere von einem Spannbolzen gebildet. Der Spannbolzen ist an einer der beiden Scharnierhälften angelenkt. In der Fesselungsstellung durchgreift der Spannbolzen randoffene Aussparungen beider Scharnierhälften. Das Scharnier wird von zwei Scharnierhälften gebildet, die jeweils eine Stirnfläche ausbilden. In der Gebrauchsstellung liegen die Stirnflächen aneinander und in der Verwahrstellung fluchten diese miteinander. Dem Scharnier ist ein Griff zugeordnet, welcher insbesondere an der Scharnierachse befestigt ist. Der Griff liegt in der Gebrauchsstellung unter den Scharnierhälften und in der Verwahrstellung liegt dieser vor den Stirnflächen. An einem Tragkörperabschnitt ist seitlich ein Traggriff angeordnet. Je einem freien Ende eines Tragkörperabschnitts ist ein Laufrad zugeordnet. Die Laufräder sind an den außenliegenden Seiten angeordnet. In der Verwahrstellung fluchten die Achsen etwa miteinander. Die Laufräder sind an je einer Backe befestigt. An dieser Backe sind auch die Beine angelenkt. Die Achsen der Laufräder stecken in Öffnungen von Lagerböckchen ein. Es ist auch möglich, die Laufräder den freien Enden zweier Beine zuzuordnen. In der Gebrauchsstellung fluchten die beiden Tragkörperabschnitte miteinander. Die Tragkörperabschnitte werden von Profilkörpern gebildet. Im Wesentlichen weisen die Profilkörper einen trapezförmigen Querschnitt auf. Die Profilkörper stecken in Taschen der Scharnierhälften ein. Endseitig stecken in den Profilkörpern Verlängerungsstücke, die herausziehbar sind. Die Verlängerungsstücke weisen ebenfalls einen trapezförmigen Querschnitt auf und liegen verschiebbar und feststellbar in formähnlichen Höhlungen des Profilkörpers ein. Gegen die Basisfläche eines trapezförmigen Verlängerungsstückes wirkt ein Feststellmittel. Die Profilkörper weisen Nuten auf, in denen Anschläge, Tragplattenhalter oder dergleichen geführt / befestigt werden. Die Anschläge, Tragplattenhalter oder dergleichen sind über in die Nuten eingeführte Exzenterschnellverschlüsse mit dem Profilkörper verklemmbar.

Die zuvor beschriebene Erfindung soll anhand eines Ausführungsbeispiels näher erläutert werden. Es zeigen:
- Fig.1: eine perspektivische Draufsicht des zusammenfaltbaren Ständers,
- Fig. 2: eine perspektivische Unteransicht des zusammenfaltbaren Ständers,
- Fig. 3: eine perspektivische Ansicht des zusammenfaltbaren Ständers mit Sicht auf den Verschluss,
- Fig. 4: eine Seitenansicht gemäß der Blickrichtung IV aus Fig.1,
- Fig. 5: eine Seitenansicht gemäß der Blickrichtung V aus Fig.1,
- Fig. 6: eine Draufsicht gemäß der Blickrichtung VI aus Fig.1,
- Fig. 7: eine Unteransicht gemäß der Blickrichtung VII aus Fig.1,
- Fig. 8: eine perspektivische Ansicht des zusammenfaltbaren Ständers in der Gebrauchsstellung in Blickrichtung auf den Spannbolzen,
- Fig. 9: eine perspektivische Ansicht des zusammenfaltbaren Ständers in der Gebrauchsstellung in Blickrichtung auf den Griff,
- Fig. 10: eine Herausvergrößerung gemäß X aus Fig. 8,
- Fig. 11: eine Herausvergrößerung gemäß XI aus Fig. 9,
- Fig. 12: eine Vorderansicht gemäß der Blickrichtung XII aus Fig. 8,
- Fig. 13: eine Draufsicht gemäß der Blickrichtung XIII aus Fig. 12,
- Fig. 14: eine Unteransicht gemäß der Blickrichtung XIV aus Fig. 12,
- Fig. 15: eine perspektivische Ansicht ähnlich der Fig. 8, jedoch sind hier die Laufräder den Beinen zugeordnet,
- Fig. 16: eine perspektivische Ansicht des Verschlusses, der gemäß der Linie XVI - XVI geschnitten worden ist,
- Fig. 17: eine perspektivische Ansicht im Schnitt gemäß der Linie XVII - XVII aus Fig. 13,
- Fig. 18: eine perspektivische Ansicht, die gemäß der Linie XVIII - XVIII aus Fig. 6 geschnitten worden ist,
- Fig. 19: eine perspektivische Ansicht des Laufrades der gemäß der Linie XIX - XIX aus Fig. 15 geschnitten worden ist und
- Fig. 20: eine perspektivische Ansicht, die gemäß der Linie XX - XX aus Fig. 13 geschnitten worden ist.

Bei solch einem zusammenfaltbaren Ständer 1 handelt es sich insbesondere um einen Ständer 1, an welchem eine Kappsäge befestigbar ist. Im Wesentlichen besteht der Ständer 1 aus einem Tragkörper 2, der aus zwei Tragkörperabschnitten 3, 4 besteht, einem Scharnier 5, das die beiden Tragkörperabschnitte 3, 4 miteinander verbindet und den Beinpaaren 6, 7.

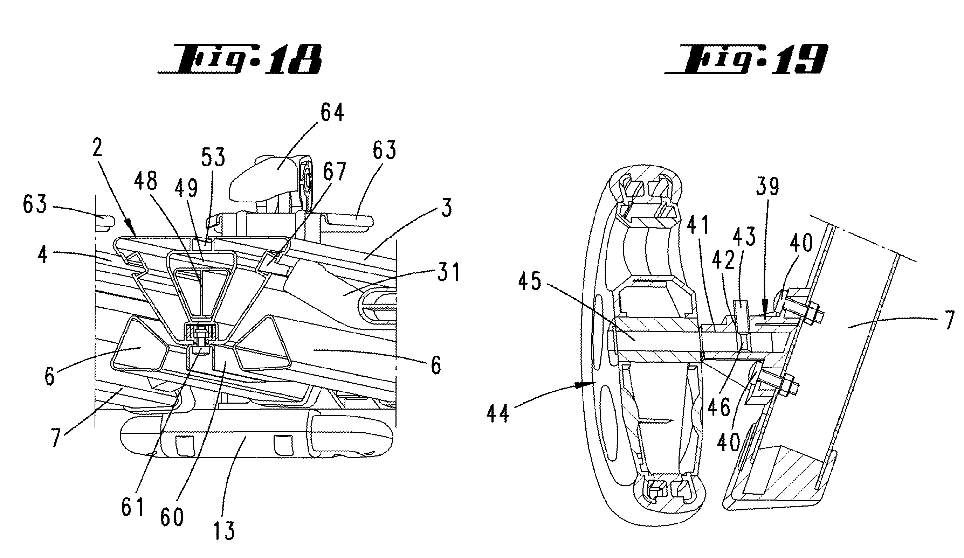

Die Tragkörperabschnitte 3, 4 bestehen aus gleich langen Profilkörpern, die im Wesentlichen einen trapezförmigen Querschnitt aufweisen (siehe Fig.18). Üblicherweise sind diese aus Aluminium gefertigt. In einer Verwahrstellung liegen die Tragkörperabschnitte 3, 4 parallel zueinander, wie auch die Beinpaare 6, 7. Die Beinpaare 6, 7 liegen seitlich neben den Tragkörperabschnitten 3, 4 an. In einer Gebrauchsstellung erstrecken sich die Tragkörperabschnitte 3, 4 fluchtend zueinander in der Horizontalen. Die Beine der Beinpaare 6, 7 ragen nach unten ab.

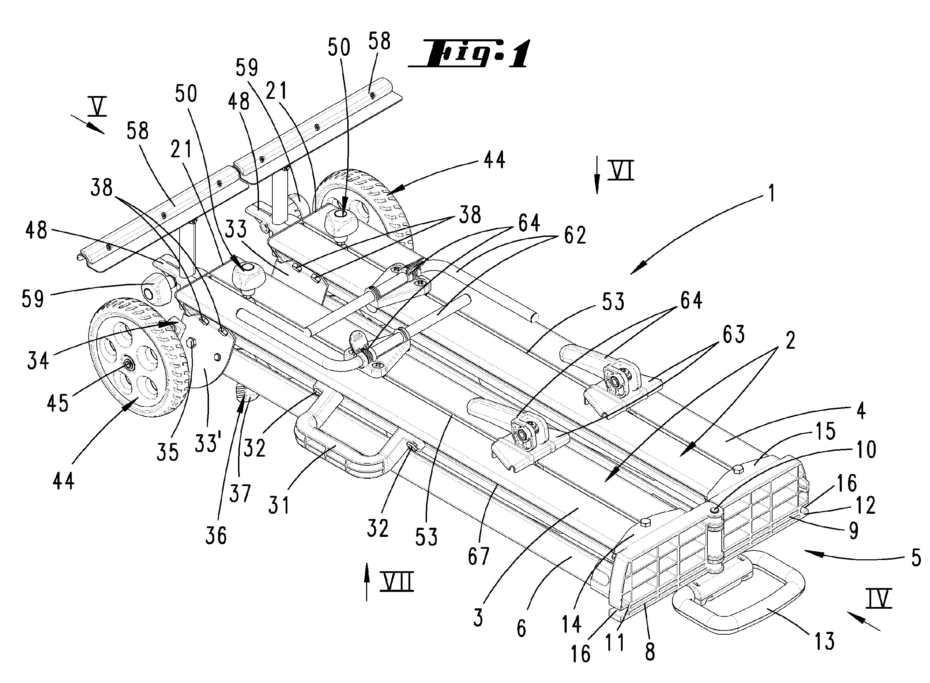

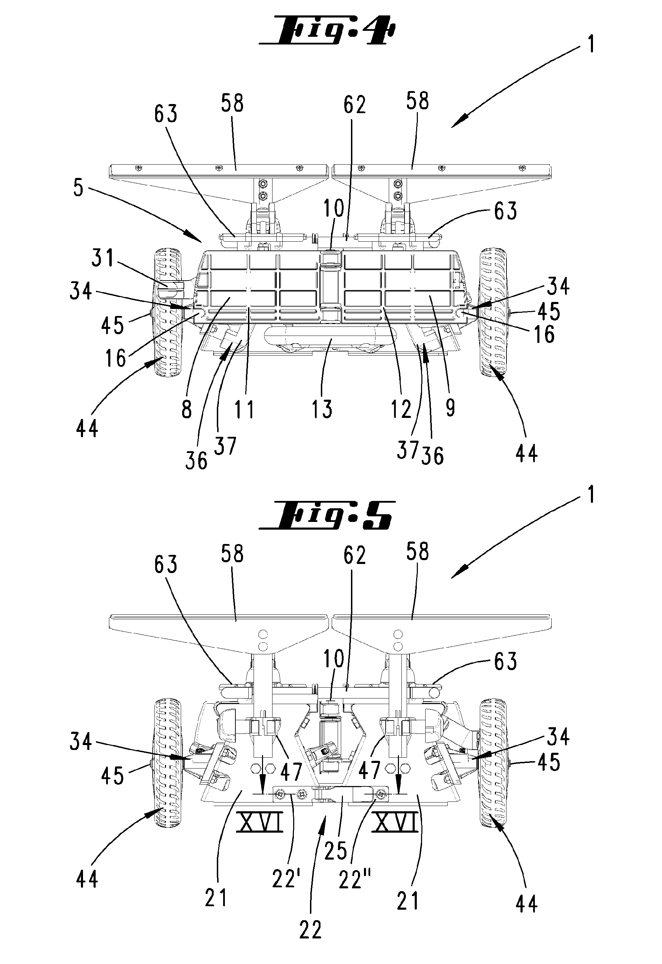

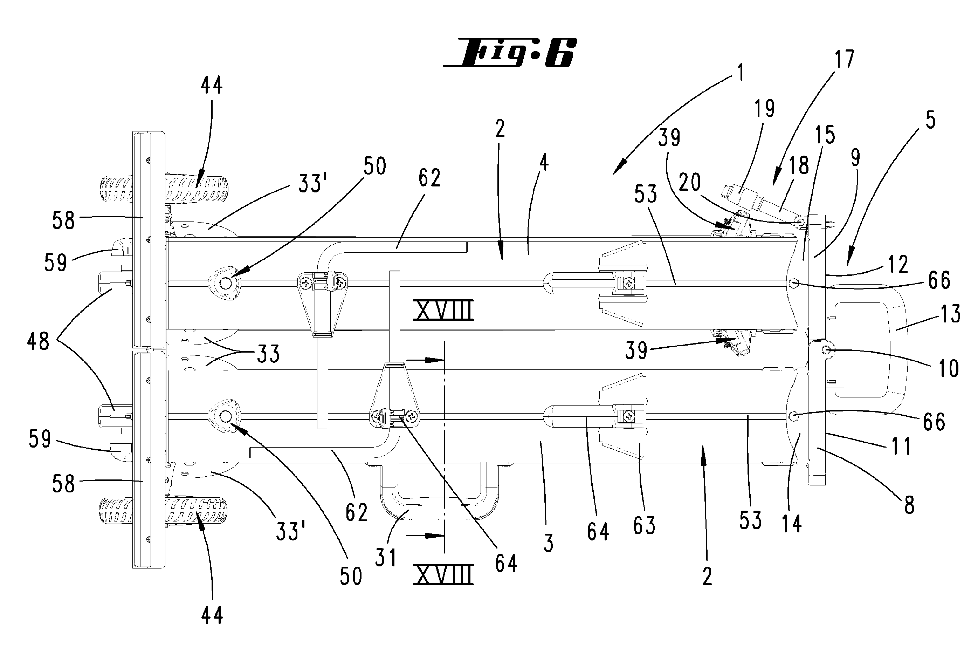

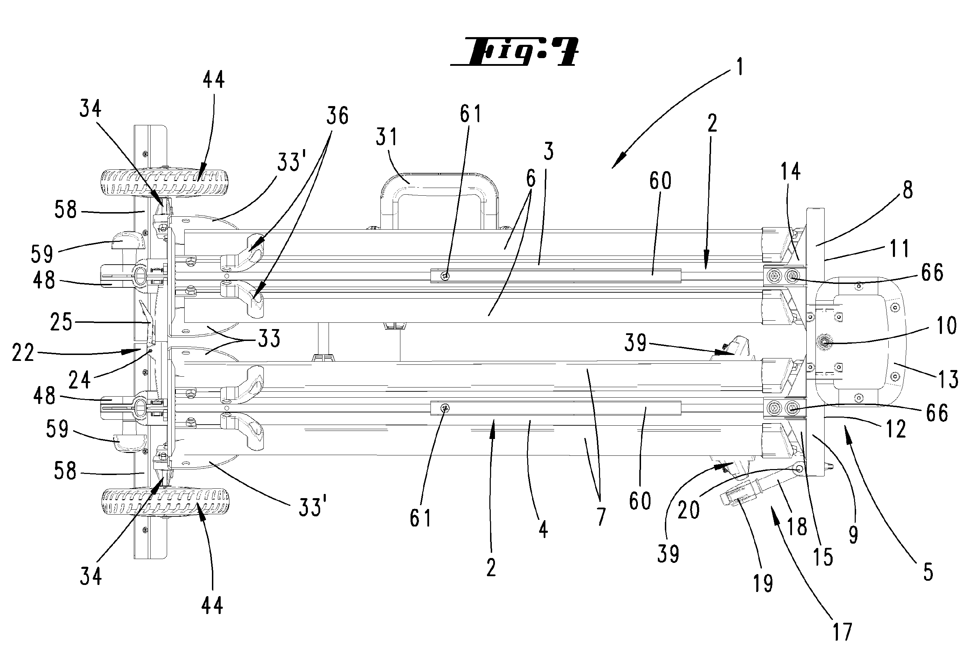

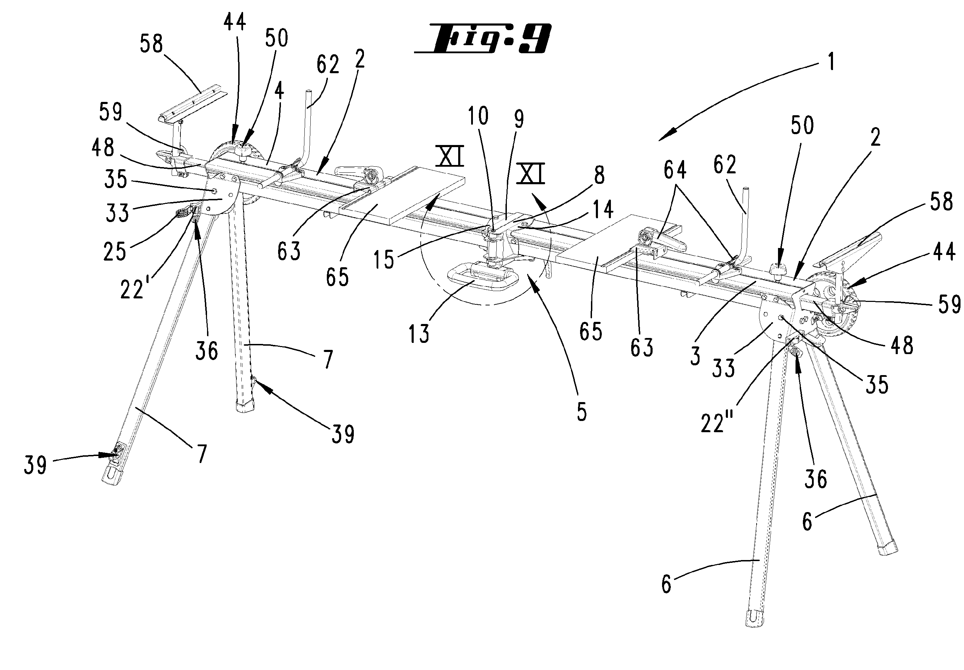

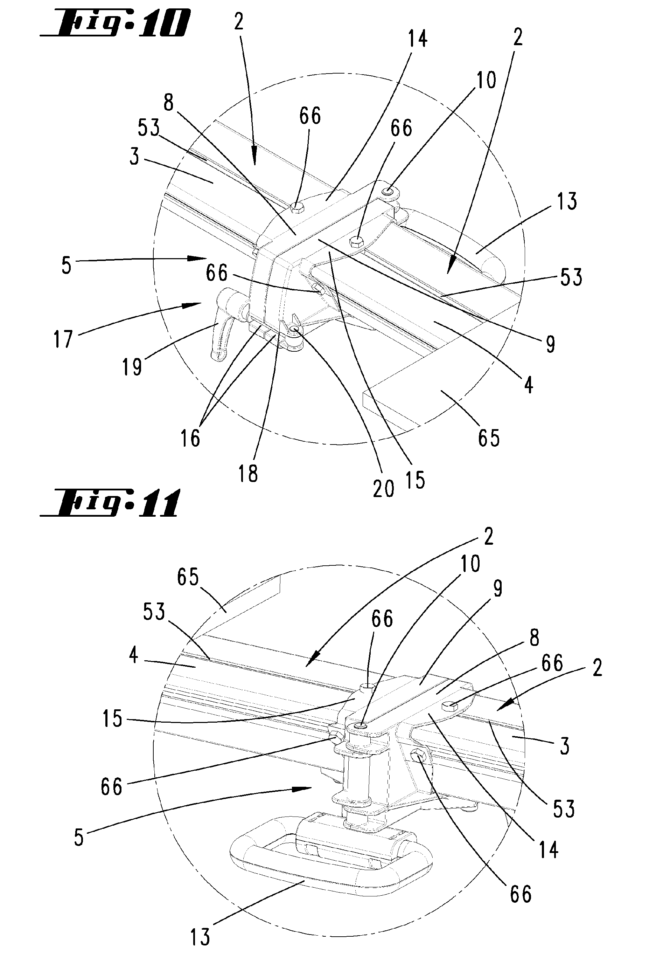

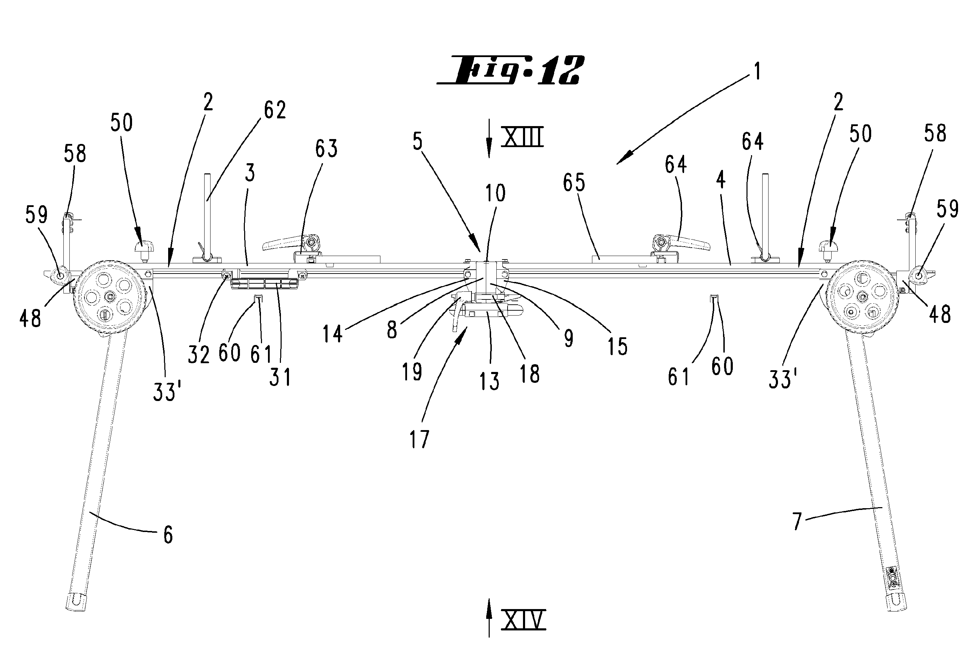

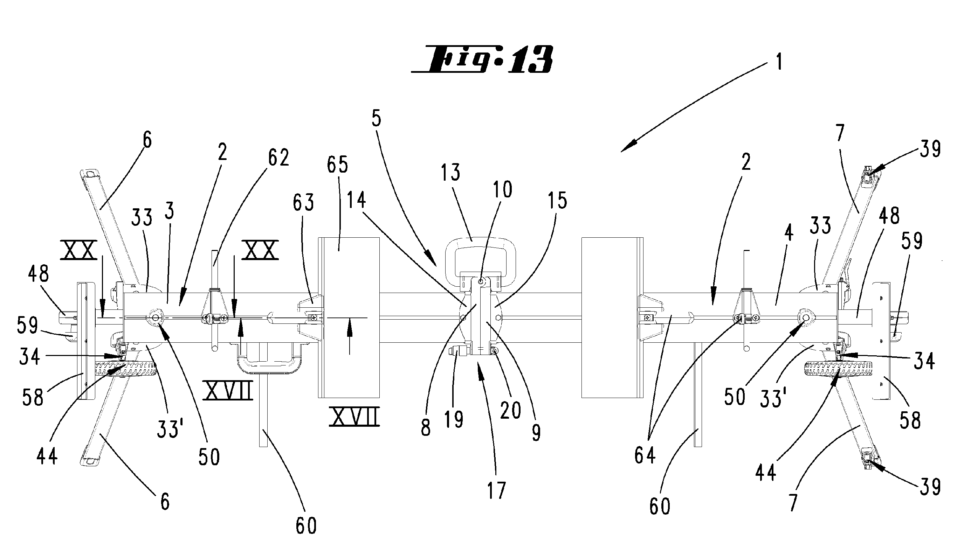

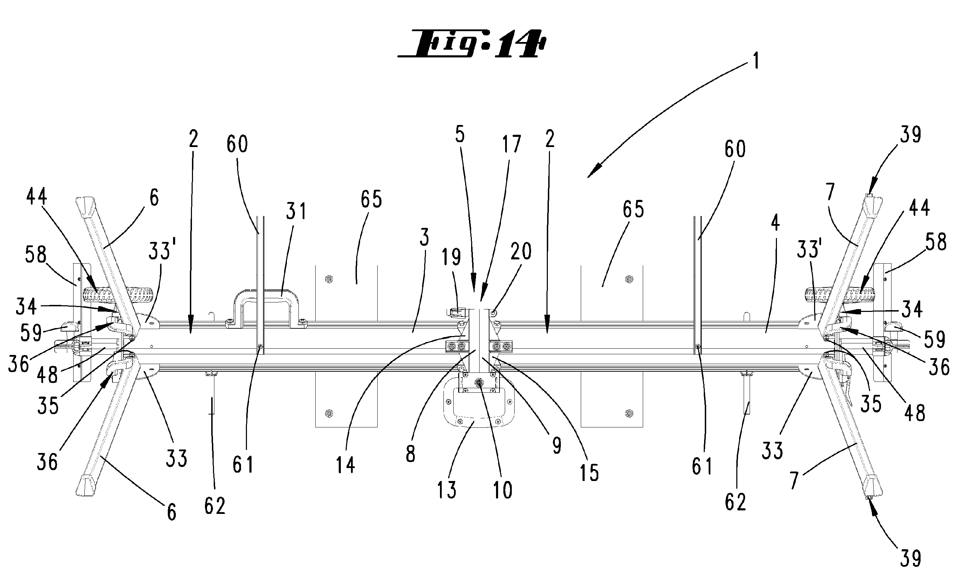

Das Scharnier 5 besteht aus zwei Scharnierhälften 8, 9. Die beiden aus Kunststoff bestehenden Scharnierhälften 8, 9 sind durch eine Scharnierachse 10 miteinander verbunden. In der Gebrauchsstellung liegt die Scharnierachse 10 in der Vertikalen. Die beiden Scharnierhälften 8, 9 bilden jeweils eine Stirnfläche 11,12 aus. In der Verwahrstellung (Fig.1 bis Fig. 7) fluchten die beiden Stirnflächen 11,12 miteinander. In der Gebrauchsstellung (Fig. 9 bis Fig. 15) liegen die Stirnflächen 11, 12 flächig aneinander.

Dem Scharnier 5 ist an seiner Unterseite ein Griff 13 zugeordnet. Der Griff 13 ist beim Ausführungsbeispiel an der Scharnierachse 10 befestigt.

Rückwärtig der Stirnflächen 11, 12 bildet das Scharnier 5 jeweils an einer Scharnierhälfte 8, 9 eine Tasche 14, 15 aus. In den Taschen 14, 15 werden die Tragkörperabschnitte 3, 4 aufgenommen, die mittels Schrauben 66 in den Taschen 14,15 fixiert werden. An den Enden der Scharnierhälften 8, 9, die der Scharnierachse 10 gegenüberliegen, ist jeweils eine randoffene Aussparung 16 ausgebildet.

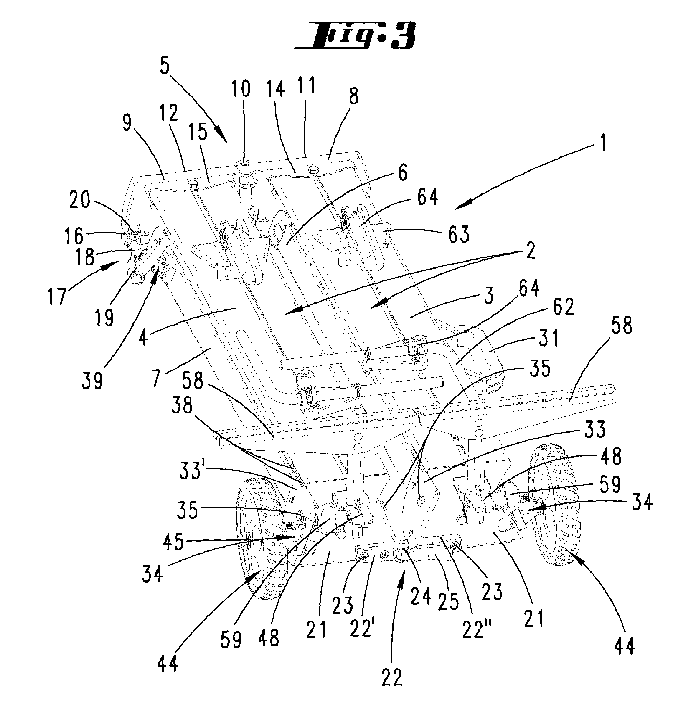

In Fig. 3 ist zu sehen, dass rückwärtig an der Scharnierhälfte 9 ein Fesselungsglied 17 angeordnet ist. Das Fesselungsglied 17 wird von einem Spannbolzen 18 gebildet. An dem freien Ende des Spannbolzens 18 ist ein Spannhebel 19 angeordnet. Der Spannhebel 19 wird mittels eines Innengewindes auf den Spannbolzen 18 geschraubt, wobei dann der Spannbolzen 18, an seinem freien Ende, ein Außengewinde aufweist. Das Fesselungsglied 17 ist um eine sich parallel zu der Scharnierachse 10 erstreckende Achse 20 schwenkbeweglich gelagert.

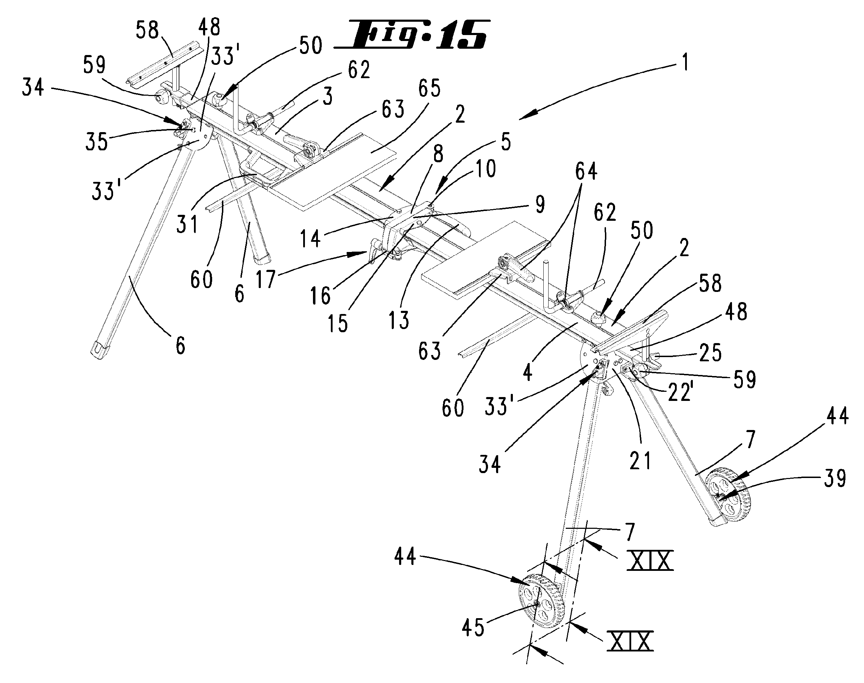

Die vom Scharnier 5 abragenden Enden der Tragkörperabschnitte 3, 4 werden durch Verschlussbleche 21 verschlossen. Die Verschlussbleche 21 sind mit Schrauben 38 an den Tragkörperabschnitten 3, 4 befestigt. Um die Tragkörperabschnitte 3, 4 in der Verwahrstellung in der parallelen Lage zu fixieren, ist auf den Verschlussblechen 21 ein Verschluss 22 angeordnet. Der Verschluss 22 besteht aus zwei Hälften 22', 22". Der Verschluss 22 ist gut in Fig. 3 und Fig. 16 zu sehen. Die beiden Verschlusshälften 22', 22" sind jeweils an einem Verschlussblech 21 eines Tragkörperabschnitts 3, 4 angebracht. Die Hälfte 22' ist dem Tragkörperabschnitt 4 und die Hälfte 22" dem Tragkörperabschnitt 3 zugeordnet. Die Hälften 22', 22" sind jeweils mittelst Schrauben 23 auf den Verschlussblechen 21 fixiert. Die Verschlusshälfte 22' bildet eine Schwenkachse 24 für einen Verschlusshebel 25 aus. Der Verschlusshebel 25 wird in Richtung der Geschlossenstellung durch eine Schenkeldrehfeder 26 federbeaufschlagt. Der Verschlusshebel 25 bildet an seinem unteren Ende einen Rasthaken 28 und eine Rasthakentasche 27 aus. Diese überfängt einen Rasthaken 28', der von der Verschlusshälfte 22" gebildet wird. Der Rasthaken 28' bildet eine Steuerschräge 29 aus. Der Verschlusshebel 25 bildet im Griffbereich Auflaufrippen 30 aus.

An dem Tragkörperabschnitt 3 ist seitlich ein Traggriff 31 angeordnet. Der Traggriff 31 ist etwa mittig auf dem Tragkörperabschnitt 3 befestigt. Die Befestigung des Traggriffes 31 wird mittels Schrauben 32 erreicht, die jeweils in einem Nutstein, der in einer seitlichen Nut 67 geführt ist, eingeschraubt sind.

Die endseitig angeordneten Verschlussbleche 21 bilden zu den Seiten der Tragkörperabschnitte 3, 4 jeweils eine Backe 33, 33' aus. Die Verschlussbleche 21 sind als Stanzbiegeteile ausgestaltet. Auf den Backen 33' ist jeweils ein Lagerböckchen 34 aus Kunststoff angeordnet. Die Beine der Beinpaare 6, 7 sind jeweils an einer Backe 33, 33' mit einer Gelenkachse 35 befestigt. Die Backen 33, 33' bilden jeweils für ein einzelnes Bein der Beinpaare 6, 7 ein Schwenklager aus. Ähnlich wie in der DE 10303115 A1 werden die Beinpaare 6, 7 durch einen Rastmechanismus 36 jeweils in der Verwahr- oder in der Gebrauchsstellung gehalten. Der Rastmechanismus 36 besitzt einen Bolzen, der in der Verwahr- oder in der Gebrauchsstellung in je eine Rastöffnung eintritt. Mittels einer Handhabe 37 kann der Bolzen aus der Raststellung heraus verlagert werden.

An dem jeweiligen freien Ende eines Beines jeden Beinpaares 7 ist jeweils au-βenliegend ein Lagerböckchen 39 angeordnet. Anhand des Schnittes der Fig. 19 wird der weitere Aufbau des Lagerböckchens 39 erklärt. Die Lagerböckchen 34 weisen die gleiche Gestalt wie die Lagerböckchen 39 auf. Die Lagerböckchen 39 werden mittels einer Schraubenverbindung 40 nahe des freien Endes jedes Beines des Beinpaares 7 befestigt. Das Lagerböckchen 39 bildet mittig eine Öffnung 41 aus. In Radialrichtung zu der Öffnung 41 ist eine Gewindebohrung 42 angeordnet. In der Gewindebohrung 42 ist eine Madenschraube 43 eingeschraubt. Die Lagerböckchen 34, 39 können jeweils ein Laufrad 44 aufnehmen. Das Laufrad 44 bildet eine Achse 45 aus. Die Achse 45 weist eine Umfangsnut 46 auf. Die Position der Umfangsnut 46 ist so mit der Gewindebohrung 42 abgestimmt, dass im eingesteckten Zustand die Achse 45 in dem Lagerböckchen 34, 39 mit Hilfe der Madenschraube 43, in der axialen Lage fixiert werden kann. Durch die Fixierung mit der Madenschraube 43 kann die Achse 45 des Laufrades 44 nicht ungewollt aus der Öffnung 41 des Lagerbocks 34, 39 heraustreten. Die Laufbewegung des Laufrades 44 wird dadurch nicht beeinträchtigt. Das freie Ende jedes Beines 7 wird von der Lauffläche des Laufrades 44 überragt.

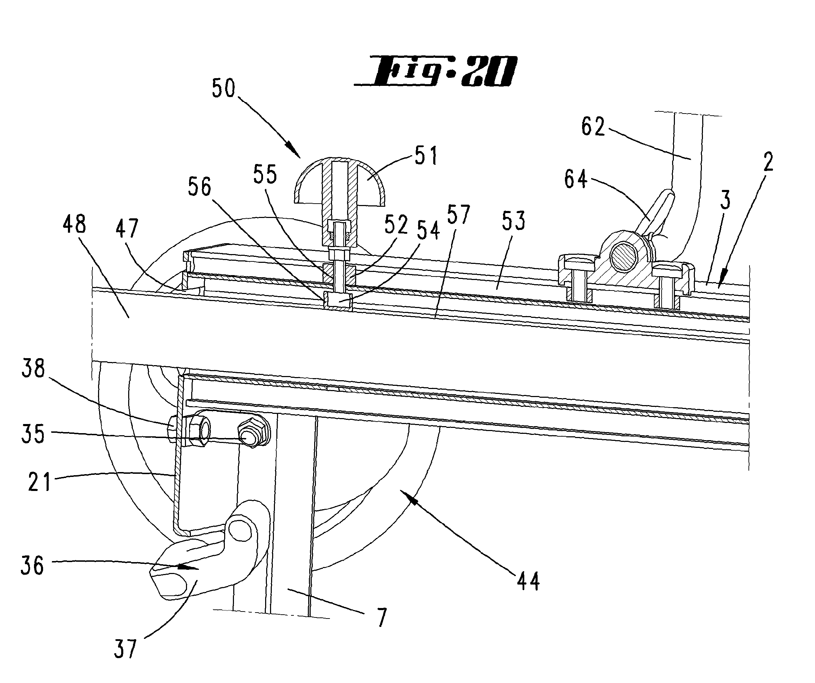

Aus den Enden der Tragkörperabschnitte 3, 4 ragt jeweils durch eine Öffnung 47 der Verschlussbleche 21 ein Verlängerungsstück 48 heraus. In dem Schnitt der Fig. 18 wird deutlich sichtbar, dass die Profilkörper einen trapezförmigen Querschnitt aufweisen. Die Basis der Trapezform weist dabei nach oben. Die C-förmige Längsnut 53 verläuft in deren Mitte. Auch die nach unten weisende Trapezfläche besitzt eine mittige Längsnut. Das Verlängerungsstück 48 weist ebenfalls einen trapezförmigen Querschnitt auf. Die Verlängerungsstücke 48 liegen jeweils in einer formähnlichen Höhlung 49 in dem Profilkörper 3, 4 ein. In Fig. 20 ist zu sehen, dass das Verlängerungsstück 48 mittels eines Feststellmittels 50 in jeder Lage fixiert werden kann. Das Feststellmittel 50 besteht aus einer Handhabe 51, die oberhalb der Tragkörperabschnitte 3, 4 angeordnet ist, einem Nutstein 52, der in einer Längsnut 53 der Tragkörperabschnitte 3, 4 geführt wird und einer Klemmschraube 54, die mit der Handhabe 51 drehfest verbunden ist. In dem Nutstein 52 ist eine Gewindebohrung 55 angeordnet, durch die die Klemmschraube 54 hindurch ragt. Um den Kopf der Klemmschraube 54 ist ein Schutz 56 angeordnet. Der Schutz 56 verhindert ein Verkratzen der Basisfläche 57 und sorgt auch für einen besseren Halt an dem Verlängerungsstück 48. Der Schutz 56 kann beispielsweise aus einem Kunststoff oder aus Gummi bestehen. Das Feststellmittel 50 wirkt auf die Basisfläche 57 des jeweiligen Verlängerungsstückes 48.

Den freien Enden der Verlängerungsstücke 48 sind in bekannter Weise Werkstückträger 58 zugeordnet. Die Werkstückträger 58 können mittels Feststellmittel 59 in verschiedener Höhe festgestellt werden.

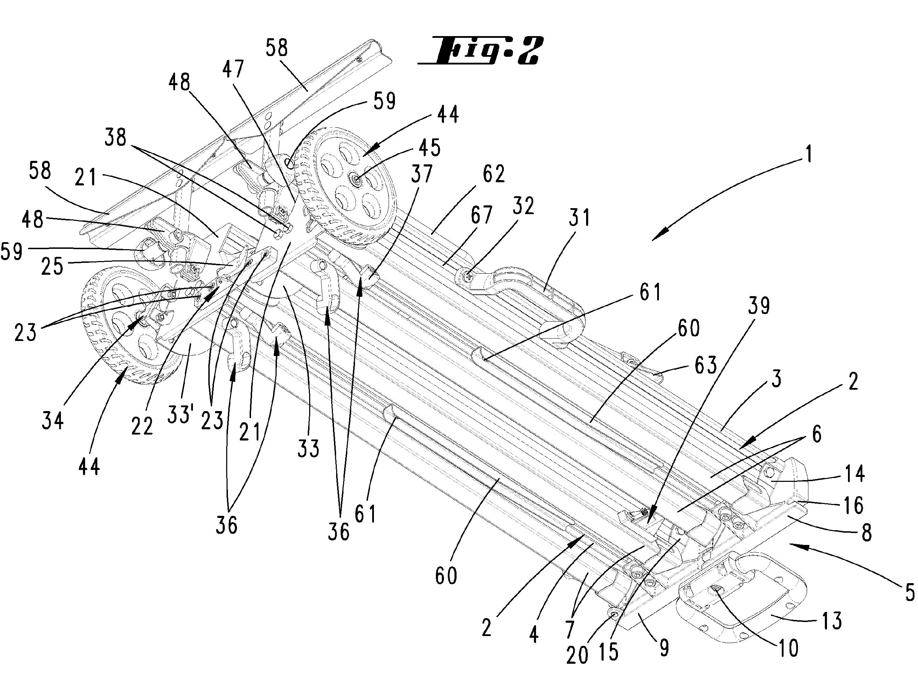

In Fig. 7 ist zu sehen, dass unterhalb der Tragkörperabschnitte 3, 4 Werkstückträgerarme 60 angeordnet sind. Die Werkstückträgerarme 60 sind um einen Schwenkpunkt 61 schwenkbar mit den Tragkörperabschnitten 3, 4 verbunden. Der Schwenkpunkt 61 ist etwa mittig unter den Tragkörperabschnitten 3, 4 angeordnet. Die Werkstückträgerarme 60 werden von Biegeteilen ausgebildet (Fig. 2).

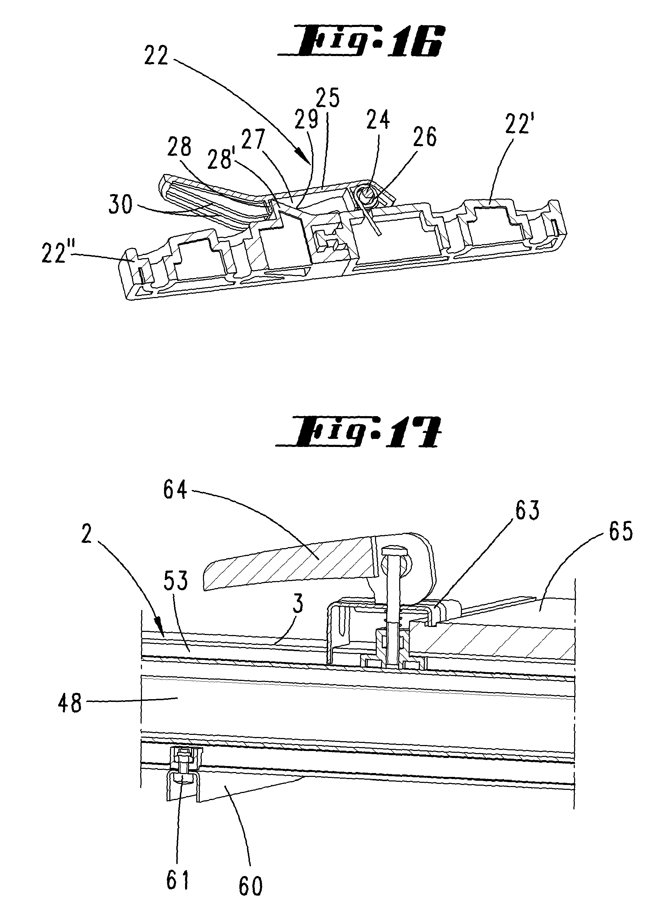

In der Längsnut 53 sind Haltemittel für Anschläge 62 und Tragplattenhalter 63 geführt. Wie besonders aus den Figuren 17, 20 zu ersehen ist, werden die Anschläge 62 und die Tragplattenhalter 63 über Exzenterschnellverschlüsse 64 mit den Profilkörpern 3, 4 verklemmt. Wie aus den Gebrauchsstellungen zu ersehen ist, nimmt der Tragplattenhalter 63 eine Tragplatte 65 bspw. für eine Kappsäge auf. Die Tragplatten 65 können aus MDF bestehen und werden mittels Spannpratzen gehalten.

Im nachfolgenden Teil wird die Wirkungsweise des Ausführungsbeispiels näher beschrieben. In den Figuren 1 bis 7 befindet sich der Ständer 1 in der Verwahrstellung. Es ist gut zu sehen, dass die Tragkörperabschnitte 3, 4 parallel zueinander angeordnet sind. Ebenfalls parallel zueinander angeordnet sind die Beinpaare 6, 7. In Fig. 2, 3 und 5 ist gut zu sehen, dass die beiden Tragkörperabschnitte 3, 4 mittels des Verschlusses 22 in der Verwahrstellung gehalten werden. Die Laufräder 44 stecken in den Lagerböckchen 34 ein, die auf den Backen 33' angeordnet sind. Die Laufräder 44 werden mittels der Madenschrauben 43 in ihrer Lage fixiert. Um nun von der Verwahrstellung in die Gebrauchsstellung zu kommen, muss zuerst der Verschluss 22 mit Hilfe des Verschlusshebels 25 geöffnet werden. Der Verschlusshebel 25 muss gegen die Kraft der Schenkeldrehfeder 26 verschwenkt werden. Nachdem der Verschluss 22 geöffnet worden ist, können die Tragkörperabschnitte 3, 4 um die Scharnierachse 10 um 180 Grad verschwenkt werden. Jetzt liegen die Tragkörperabschnitte 3, 4 in Fluchtlage hintereinander. Um die Tragkörperabschnitte 3, 4 in dieser Lage zu fixieren, muss nun das Fesselungsglied 17 um die Achse 20 in die randoffenen Aussparungen 16 der einzelnen Scharnierhälften 8, 9 hineingeschwenkt werden. Nachdem der Spannbolzen 18 in den randoffenen Aussparungen 16 der Scharnierhälften 8, 9 einliegt, muss das Fesselungsglied 17 mit dem Spannhebel 19 gespannt werden. Nachdem das Fesselungsglied 17 gespannt worden ist, können die Beinpaare 6, 7 von der Verwahrstellung in die Gebrauchsstellung gebracht werden. Um die Beinpaare 6, 7 um die Schwenkachse 35 schwenken zu können, muss zuerst der Rastmechanismus 36 gelöst werden. Über die Betätigung der Handhabe 37 wird der Rastmechanismus 36 außer Eingriff mit den Backen 33, 33' gebracht und die Beinpaare 6, 7 können in die Gebrauchsstellung verschwenkt werden. Wenn die Beinpaare 6, 7 ihre Gebrauchsstellung erreicht haben, rastet der Rastmechanismus 36 wieder ein und fixiert die Beinpaare 6, 7 in der Gebrauchsstellung. Der Rastmechanismus 36 funktioniert ähnlich wie in der DE 10303115 A1.

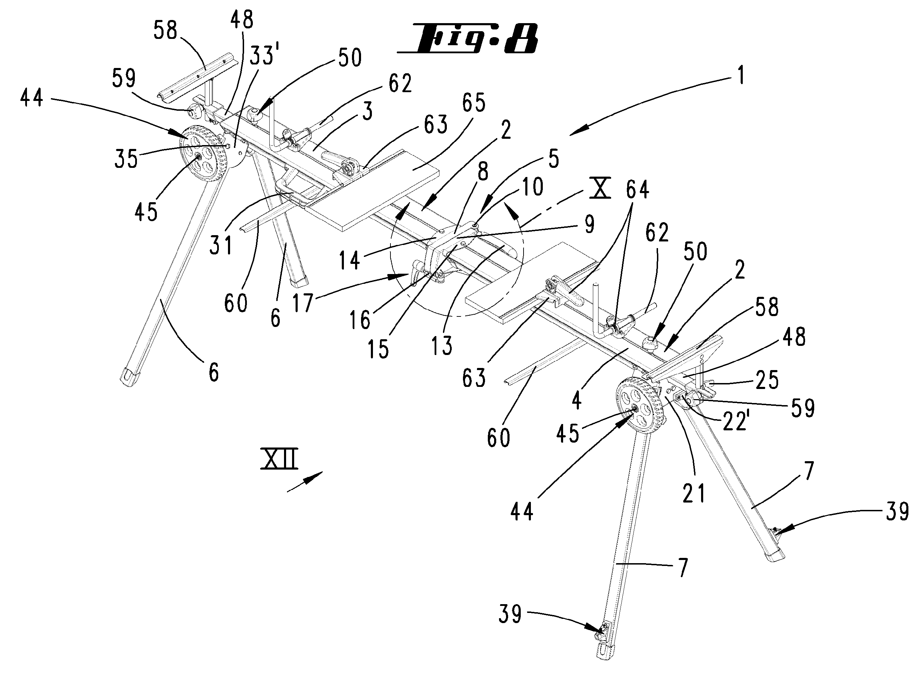

Die Gebrauchsstellung wird anhand der Figuren 8 bis 14 veranschaulicht. In diesen Figuren ist gut zu sehen, dass z. B. der Tragplattenhalter 63 eine Tragplatte 65 aufnehmen kann. Ebenfalls wurden hier die Anschläge 62, die Werkstückträger 58 und die Werkstückträgerarme 60 in ihre Gebrauchsstellung verlagert. Diese können, in ihren Bewegungsbahnen, in unterschiedlichen Positionen fixiert werden.

In Fig. 15 wurden die Laufräder 44 aus den Lagerböckchen 34 in die Lagerböckchen 39 verlagert. Um die Laufräder 44 aus den Lagerböckchen 34 herauszubekommen, muss zuerst die Madenschraube 43 außer Eingriff mit der Umfangsnut 46 gebracht werden. Nachdem dies geschehen ist, kann die Achse 45 der Laufräder 44 aus der Öffnung 47 herausgezogen werden. Danach kann man die Achse 45 in die Öffnung 47 der Lagerböckchen 39 einführen und mittels der Madenschraube 43 neu fixieren. Nun ist es möglich, den Ständer 1 an den Beinpaaren 6 anzuheben und mit Hilfe der Laufräder 44 zu verschieben.

Um den Ständer 1 wieder in die Verwahrstellung zu bringen, müssen die Laufräder 44 wieder ummontiert werden, die Beinpaare 6, 7 eingeklappt werden und die Tragkörperabschnitte 3, 4 in Parallellage gebracht werden. Dazu müssen zuerst die Rastmechanismen 36 aufgehoben werden, um die Beinpaare 6, 7 einzuklappen und das Fesselungsglied 17 geöffnet werden, um die Tragkörperabschnitte 3, 4 in die parallele Lage zu verschwenken. Der Verschluss 22, der die beiden Tragkörperabschnitte 3, 4 in der Parallellage hält, rastet selbsttätig ein. Hierbei überläuft der Rasthaken 28 den Gegenrasthaken 28'. Dabei laufen die Auflaufrippen 30 des Verschlusshebels 25 auf die Steuerschräge 29 des Rasthakens 28' auf und verschwenken den Verschlusshebel 25 gegen die Kraft der Schenkeldrehfeder 26 um die Schwenkachse 24. Nachdem die Tragkörperabschnitte 3, 4 in Parallellage gebracht worden sind, wird durch die Kraft der Schenkeldrehfeder 26 der Verschlusshebel 25 in die Geschlossenstellung zurückverlagert. Jetzt überfängt die Rasthakentasche 27 den Rasthaken 28' und fesselt die beiden Tragkörperabschnitte 3, 4 aneinander.

In der Verwahrstellung ist es möglich, den zusammengeklappten Ständer 1 hinter sich herzuziehen. Man nimmt den Ständer 1 an dem Griff 13, und die Laufräder 44 rollen auf dem Boden ab. Dadurch ist ein leichter Transport des Ständers 1 möglich. Zufolge seiner Anlenkung an der Scharnierachse 10 ist der Griff 13 schwenkbar. Er kann unter den Tragkörper 2 verschwenkt werden. In der Verwahrstellung überragt der Griff 13 die beiden in Fluchtlage zueinander liegenden Stirnflächen 11,12 des Scharniers 5.

In der Gebrauchsstellung besitzt der Kappsägenständer eine ausreichende Länge, um auch lange Werkstücke zu bearbeiten. In der Verwahrstellung bildet der Kappsägenständer 1 einen kompakten Gegenstand.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Zusammenfaltbarer Ständer (1) für Kappsägen oder dergleichen mit einem langgestreckten Tragkörper (2), an welchem die Kappsäge befestigbar ist und an welchem an jedem seiner beiden Enden jeweils zwei Beine (6, 7) angelenkt sind, die von einer Verwahrstellung, in der sie sich im Wesentlichen parallel zum Tragkörper (2) erstrecken, in eine Gebrauchsstellung schwenkbar sind, in der sie im Wesentlichen quer vom Tragkörper (2) abragen, **dadurch gekennzeichnet, dass** der Tragkörper (2) zwei mit einem Scharnier (5) miteinander verbundene Tragkörperabschnitte (3, 4) ausbildet, die in der Verwahrstellung parallel zueinander liegen und durch Schwenken um 180° in die Gebrauchsstellung bringbar sind.

2. Ständer nach Anspruch 1 oder insbesondere danach, **dadurch gekennzeichnet, dass** das Scharnier (5) eine in der Gebrauchsstellung in der Vertikalen liegende Scharnierachse (10) besitzt.

3. Ständer nach einem oder mehreren der vorhergehenden Ansprüche oder insbesondere danach, **dadurch gekennzeichnet, dass** die beiden scharnierfemen Enden der Tragkörperabschnitte (3, 4) in der Verwahrstellung mit einem Verschluss (22) aneinander gefesselt sind.

4. Ständer nach einem oder mehreren der vorhergehenden Ansprüche oder insbesondere danach, **dadurch gekennzeichnet, dass** der Verschluss (22) einen insbesondere federbeaufschlagten Rasthaken (28) ausbildet.

5. Ständer nach einem oder mehreren der vorhergehenden Ansprüche oder insbesondere danach, **dadurch gekennzeichnet, dass** das Scharnier (5) in der Gebrauchsstellung mit einem Fesselungsglied (17) fixiert ist.

6. Ständer nach einem oder mehreren der vorhergehenden Ansprüche oder insbesondere danach, **dadurch gekennzeichnet, dass** das Fesselungsglied (17) an der der Scharnierachse (10) abgewandten Seite des Scharniers (5) sitzt und insbesondere von einem Spannbolzen (18) gebildet ist.

7. Ständer nach einem oder mehreren der vorhergehenden Ansprüche oder insbesondere danach, **dadurch gekennzeichnet, dass** der Spannbolzen (18) an einer der beiden Scharnierhälften (9) angelenkt ist und in der Fesselungsstellung mindestens eine randoffene Aussparungen (16), insbesondere beider Scharnierhälften (8, 9) durchgreift.

8. Ständer nach einem oder mehreren der vorhergehenden Ansprüche oder insbesondere danach, **dadurch gekennzeichnet, dass** das Scharnier (5) zwei Scharnierhälften (8, 9) mit Stirnflächen (11, 12) ausbildet, wobei die Stirnflächen (11, 12) in der Gebrauchsstellung aneinander anliegen und in der Verwahrstellung miteinander fluchten.

9. Ständer nach einem oder mehreren der vorhergehenden Ansprüche oder insbesondere danach, **gekennzeichnet durch** einen dem Scharnier (5) zugeordneten Griff (13), welcher insbesondere an der Scharnierachse (10) befestigt ist.

10. Ständer nach einem oder mehreren der vorhergehenden Ansprüche oder insbesondere danach, **dadurch gekennzeichnet, dass** der Griff (13) in der Gebrauchsstellung unter den Scharnierhälften (8, 9) und in der Verwahrstellung vor den Stirnflächen (11, 12) liegt.

11. Ständer nach einem oder mehreren der vorhergehenden Ansprüche oder insbesondere danach, **gekennzeichnet durch** einen insbesondere seitlich an einem Tragkörperabschnitt (3) angeordneten Traggriff (31).

12. Ständer nach einem oder mehreren der vorhergehenden Ansprüche oder insbesondere danach, **gekennzeichnet durch** zwei je einem freien Ende eines Tragkörperabschnittes (3, 4) zugeordnete Laufräder (44), die in der Verwahrstellung etwa koaxial zueinander an jeweils den außenliegenden Seiten sitzen.

13. Ständer nach einem oder mehreren der vorhergehenden Ansprüche oder insbesondere danach, **dadurch gekennzeichnet, dass** die Laufräder (44) an je einer Backe (33') befestigt sind, an welcher Backe (33, 33') auch die Beine (6, 7) angelenkt sind.

14. Ständer nach einem oder mehreren der vorhergehenden Ansprüche oder insbesondere danach, **dadurch gekennzeichnet, dass** die Achsen (45) der Laufräder (44) in Öffnungen (47) von Lagerböckchen (34, 39) stecken.

15. Ständer nach einem oder mehreren der vorhergehenden Ansprüche oder insbesondere danach, **dadurch gekennzeichnet, dass** die Laufräder (44) den freien Ende zweier Beine (7) zuordbar sind.

16. Ständer nach einem oder mehreren der vorhergehenden Ansprüche oder insbesondere danach, **dadurch gekennzeichnet, dass** die Tragkörperabschnitte (3, 4) in der Gebrauchsstellung miteinander fluchtende Profilkörper sind.

17. Ständer nach einem oder mehreren der vorhergehenden Ansprüche oder insbesondere danach, **dadurch gekennzeichnet, dass** die Profilkörper im Wesentlichen einen trapezförmigen Querschnitt aufweisen.

18. Ständer nach einem oder mehreren der vorhergehenden Ansprüche oder insbesondere danach, **dadurch gekennzeichnet, dass** die Profilkörper in Taschen (14, 15) der Scharnierhälften (8, 9) stecken.

19. Ständer nach einem oder mehreren der vorhergehenden Ansprüche oder insbesondere danach, **gekennzeichnet durch** in den Profilkörpern steckende, endseitig daraus herausziehbare Verlängerungsstücke (48).

20. Ständer nach einem oder mehreren der vorhergehenden Ansprüche oder insbesondere danach, **dadurch gekennzeichnet, dass** die Verlängerungsstücke (48) einen trapezförmigen Querschnitt aufweisen und in je einer formähnlichen Höhlung (49) des Profilkörpers verschiebbar und feststellbar einliegen.

21. Ständer nach einem oder mehreren der vorhergehenden Ansprüche oder insbesondere danach, **gekennzeichnet durch** gegen die Basisfläche (57) eines trapezförmigen Verlängerungsstückes (48) wirkende Feststellmittel (50).

22. Ständer nach einem oder mehreren der vorhergehenden Ansprüche oder insbesondere danach, **gekennzeichnet durch** in Nuten (53) der Profilkörper geführte / befestigte Anschläge (62), Tragplattenhalter (63) oder dergleichen.

23. Ständer nach einem oder mehreren der vorhergehenden Ansprüche oder insbesondere danach, **dadurch gekennzeichnet, dass** die Anschläge (62), Tragplattenhalter (63) oder dergleichen über in die Nuten (53) eingeführte Exzenterschnellverschlüsse (64) mit dem Profilkörper verklemmbar sind.
